# EUROPEAN PATENT SPECIFICATION

(11) **EP 3 159 259 B1**
(45) Date of publication and mention of the grant of the patent: **20.02.2019**
(21) Application number: 15382516.1
(22) Date of filing: 20.10.2015
(51) Int. Cl.: B64C 21/06

(54) **LEADING EDGE WITH LAMINAR FLOW CONTROL AND MANUFACTURING METHOD THEREOF**
VORDERKANTE MIT LAMINARER STRÖMUNGSKONTROLLE UND HERSTELLUNGSVERFAHREN DAFÜR
BORD D'ATTAQUE AVEC CONTRÔLE D'ÉCOULEMENT LAMINAIRE ET SON PROCÉDÉ DE FABRICATION

(43) Date of publication of application: 26.04.2017
(73) Proprietor: Airbus Operations, S.L., 28906 Getafe (Madrid) (ES)
(72) Inventor: GARCÍA NIETO, Carlos, 28906 GETAFE (Madrid) (ES); GUINALDO FERNÁNDEZ, Enrique, 28906 GETAFE (Madrid) (ES); CEBOLLA GARROFE, Pablo, 28906 GETAFE (Madrid) (ES); VÉLEZ DE MENDIZABAL ALONSO, Iker, 28906 GETAFE (Madrid) (ES); CRESPO PEÑA, Soledad, 28906 GETAFE (Madrid) (ES); HONORATO RUIZ, Francisco, Javier, 28906 GETAFE (Madrid) (ES); TORRES SALAS, Álvaro, 28906 GETAFE (Madrid) (ES); CALERO CASANOVA, Álvaro, 28906 GETAFE (Madrid) (ES)
(74) Representative: Carpintero Lopez, Francisco

(56) References cited:
- GB-A- 713 426
- US-A- 2 833 492
- US-A- 5 263 667
- US-A- 5 366 177
- US-A- 6 135 395
- US-A1- 2009 212 165
- US-A1- 2010 116 943
- US-A1- 2014 021 304
- US-A1- 2015 183 513
- US-B1- 6 655 633

## Description

### Object of the invention

The present invention refers to a configuration and a manufacturing method of a leading edge section with laminar flow control, for aircraft lifting surfaces, such as wings or stabilizers.

An object of the present invention is to provide a leading edge design integrating a laminar flow control system, which can be manufactured in one-shot, that is, with only one curing cycle, or alternatively in one injection cycle (in the case of thermoplastic injection with or without reinforcements or fillers), in order to reduce manufacturing time and production costs.

Additionally, it is also an object of the present invention to provide a leading edge with a laminar flow control system, with reduced weight but which at the same time can serve as a structural component to withstand loads at the lifting surface.

### Background of the invention

Aircraft manufacturers are continuously seeking ways of increasing aircraft performance and reducing fuel consumption. One of the main factors when it comes to improving aircraft performance, is the aerodynamic drag on aircraft surfaces.

A significant amount of aircraft drag is caused by turbulent air flow on the aircraft exposed surfaces during flight. Near the aircraft skin the air flow is turbulent mainly due to the following reasons:
- laminar flow is unstable with respect to small perturbations, and
- surface imperfections may cause early transition from laminar to turbulence.

Since air laminar boundary layers create less friction at the aircraft surfaces than air turbulent boundary layers, one technique for reducing aircraft drag is to form and maintain a laminar boundary layer over the aircraft external surfaces.

Laminar Flow reduces friction drag and implementation on vertical tail planes (VTP) and horizontal tail planes (HTP), would potentially lead to up to 2% aircraft drag reduction.

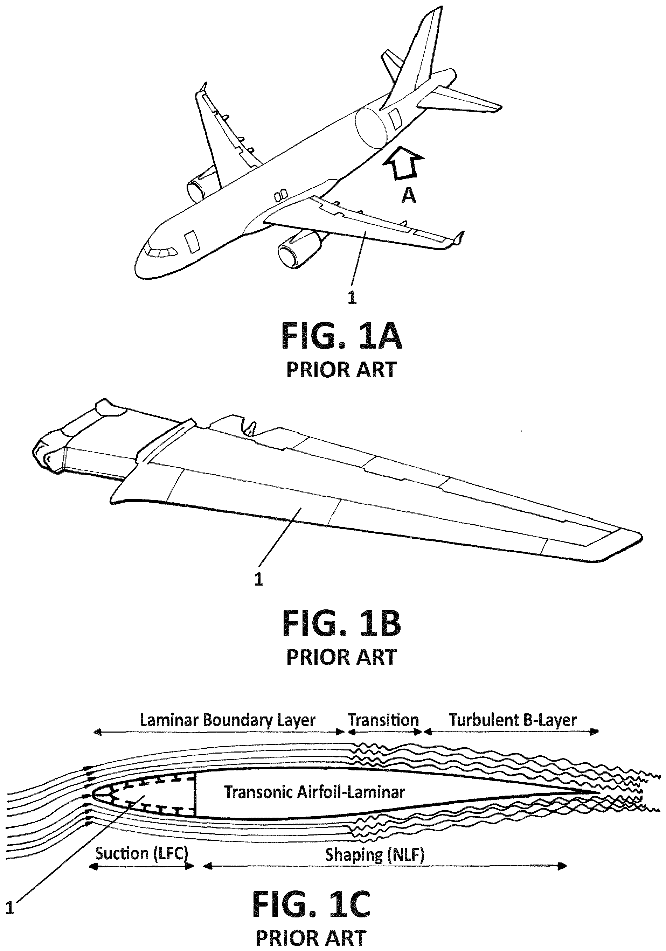

Current existing methods to form and maintain a laminar flow are:
- Natural Laminar Flow (NLF) is obtained by a profile that produces a progressive pressure drop (i. e. favourable gradient) resulting in flow acceleration and a delay in transition to turbulence approximately at the point of minimum pressure.
- Laminar Flow Control (LFC) which relies on a relatively small amount of air being sucked through a perforated skin to suppress boundary layer instabilities.
- Hybrid Laminar Flow Control (HLFC) is a combination of full LFC and NLF as shown in figure 1, which relies on:
   1. suction being applied to the leading edge (1) 10 - 20% of the chord (i. e. ahead of the front spar), to stabilize the flow, and
   2. a correctly profiled wing or lifting surface contour, to generate a suitable pressure gradient, thus maintaining the laminar flow aft of the suction area.

Transition from laminar to turbulent flow, is delayed by this technique, and may even occur after the 50% chord location, due to the combined effects of the local pressure gradient and Reynolds number.

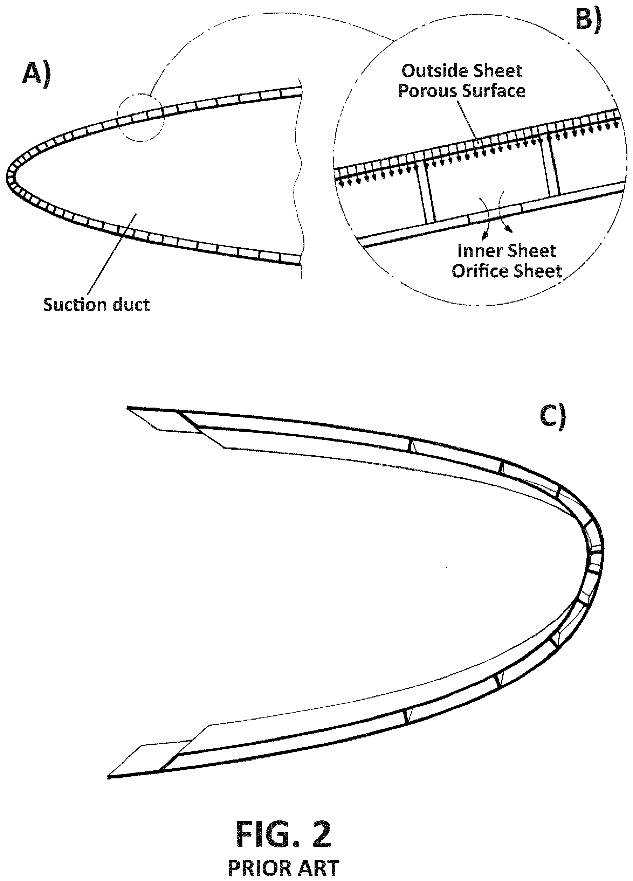

Figure 2 shows a laminar flow control system, to actuate on the boundary layer by bleeding air through a micro-perforated skin surface (3) at the leading edge (1). Typically, the diameter of the micro-perforations is within the range 10 - 100 microns. The air is ducted beneath the skin (3) through a network of chambers (2) located at the leading edge section (D-box) (1), and finally exhausted, through a main chamber or a suction duct.

As suction is limited to the forward part of the wing or lifting surface, HLFC avoids many of the structural problems associated with LFC. It also requires a smaller and lighter suction system. These advantages make HLFC more suitable than full LFC for subsonic transport aircraft. The HLFC technology has also good aerodynamic performance in the fully turbulent mode, which is a significant advantage.

This air suction system of the leading edge (1) requires a differential pressure distribution over the leading edge surface. This differential pressure distribution is achieved by providing chambers of different size, to obtain different pressure within each chamber, as shown more clearly in figure 2C.

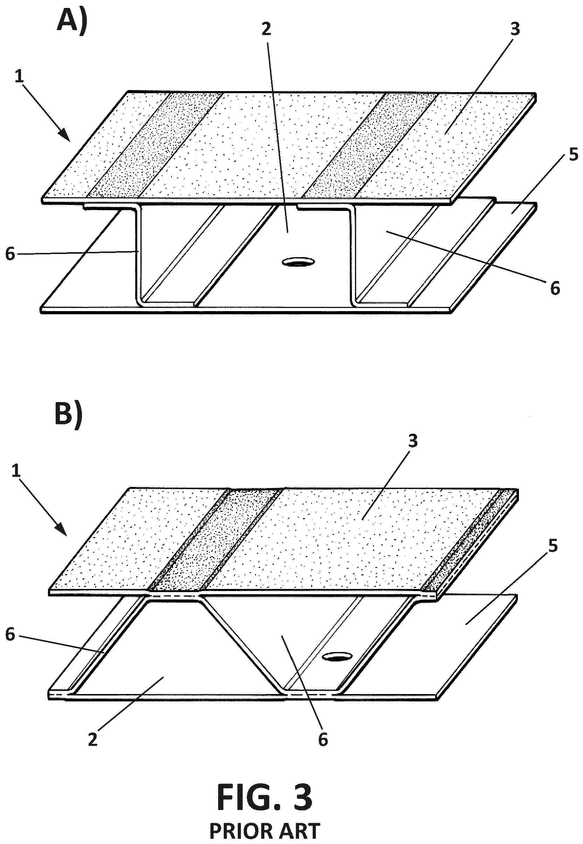

As shown in figure 3, a conventional leading edge configuration with laminar flow control, is formed by a micro-perforated outer skin (3), a perforated inner skin (5) and a set of transversal walls (6) fixed to outer and inner skins at specific locations to form chambers (2) of different sizes, to create the chambers (2) allowing air circulation through them.

US patent US6655633B1 describes an elongated load carrying structure comprising a plurality of elongated thin-walled triangular tubes placed co-extensively in a complementary side-by-side fashion to form at least a portion of the wall of a hollow core.

On the other hand, US patent application US2833492A refers to control of the boundary layer of air immediately adjacent a surface passing through the atmosphere at a high rate of speed in order to reduce turbulence.

US 5366177A discloses a laminar flow control apparatus for aerodynamic surfaces comprising perforations coupled with fluid transporting channels.

One of the main problems involved in the implementation of the HLFC technique, is that the components of the leading edge have to be manufactured separately and then assembled together. In addition to this, assembly by means of mechanical joints may reduce the effective outer suction surface. Thus, manufacturing and assembly processes of these multi-chambered structures with laminar flow control, are complicated and expensive. Furthermore, the weight penalty involved is significantly high due to the metallic materials implemented and the length of all mechanical joints used for building the leading edge, penalizing so much the aircraft performances that all HLFC benefits would be overcame and, as consequence, its implementation may be discarded

### Summary of the invention

The present invention is defined in the attached independent claims, and refers to a leading edge of an aircraft wing or stabilizer (a HTP, or a VTP) and its manufacturing method, to obtain a leading section integrating a laminar flow control system.

The leading edge with laminar flow control, typically consists of a micro-drilled outer skin, a perforated inner skin, and a group of chambers formed between the outer and inner skins, said chambers being arranged and dimensioned to obtain different pressure gradients over the outer wet surface of the leading edge, such as, via the micro-drilled outer skin, different suction pressures are so achieved on the wet surface of the leading edge.

Therefore, an aspect of the invention refers to a leading edge section obtained entirely from a composite material or alternatively from injected thermoplastics (with or without reinforcements or fillers), and configured to implement a laminar flow control, which comprises a perforated outer skin shaped with an aerodynamic leading edge profile, a perforated inner skin internally arranged with respect to the outer skin, and a plurality of suction chambers formed between the outer and inner skins and extending span-wise, such as the exterior region of the leading edge is communicated with an interior region of the leading edge through said suction chambers.

The leading edge section further comprises a plurality of tubular members span-wise arranged in the leading edge and placed between the outer and inner skins to form said suction chambers. These tubular members are perforated to allow air circulation from the wet surface of the leading edge to the leading edge interior.

The outer skin, the inner skin and the tubular members are cured together in one-shot in the case of composite or injected together in one shot, in the case of thermoplastic (with or without reinforcements or fillers), that is, in the same curing cycle, such as the manufacturing and assembly time and costs are significantly reduced.

Another aspect of the invention refers to a manufacturing method for producing with composite materials or thermoplastic materials, leading edge sections with laminar flow control.

In the method of the invention, a laminate formed by a stack of layers of a composite material, is conformed to obtain an outer skin pre-form with the shape of an aerodynamic leading edge profile. Another laminate, is conformed to obtain an inner skin pre-form of the leading edge.

Separately, a plurality of tubular members pre-forms are formed, for example also by conforming a composite laminate.

The outer skin pre-form, the inner skin pre-form, and the tubular members pre-forms are then assembled together to construct a leading edge perform with the desired configuration. More in detail, the tubular members are span-wise arranged between the outer skin and inner skin, to define a plurality of suction chambers between the outer and inner skin pre-forms.

The leading edge pre-form is cured, such as outer skin, inner skin and the tubular members are cured in the same curing cycle, and the leading edge is obtained as an integral or unitary component, allowing both the use of dry-fibre or pre-preg Carbon Fiber Reinforced Plastic (CFRP).

Preferably, an erosion protective layer can also be co-cured, that is, integrated with the leading edge in the same curing cycle, This erosion protective layer may consist of a polyurethane coating or a metallic film impregnated with resin on one of its surfaces.

Finally, the outer skin, the inner skin and tubular members in a cured state, are perforated, to communicate an exterior region of the leading edge with an interior region of the leading edge through said suction chambers.

In the case of thermoplastic injection (with or without reinforcements or fillers), the mould cavity provides the whole structure. Both skins (inner and outer) and the suction chambers are obtained in a single injection cycle.

Some of the advantages of the invention, are:
- Allow a one shot full CFRP integrated HTP LE HLFC configuration part.
- Reduced manufacturing time and cost, with almost null assembly costs
- Reduced weight structural part due to full CFRP integrated HTP LE HLFC
- Enable HLFC implementation in areas where metallic manufacturing constrains limited its implementation
- Improve HLFC benefits by increasing effective aerodynamic area thanks to the mechanical or welded joints removal
- Improve HLFC systems operability due to composite benefits in terms of corrosion, fatigue resistance and damage tolerance.

### Brief description of the drawings

Preferred embodiments of the invention, are henceforth described with reference to the accompanying drawings, in which:
Figure 1.- shows a cross-sectional view of an schematic representation of a wing or lifting surface with a hybrid laminar flow configuration according to the prior art, wherein laminar and turbulent air flow is represented with thin lines on upper and lower surfaces.
Figure 2.- shows a multi-chamber configuration of the leading edge section of a wing or lifting surface with laminar flow control, as the one shown in figure 1, wherein drawing (A) is a cross-sectional view, drawing (B) is an enlarged view of a detail of drawing (A), and drawing (C) is a perspective view.
Figure 3.- shows two perspective views of conventional designs of leading edge sections with laminar flow control.
Figure 4.- shows schematically in drawing (A) a cross-sectional view of a leading edge section according to the invention. Drawing (B) is an enlarged detail of figure (A). Drawing (C) is similar representation than figure (B) of an alternative embodiment of the leading edge. The micro-perforations of the outer skin and in the tubular members are not shown in the figure, but air circulation via these micro-perforations is illustrated by arrows.
Figure 5.- shows a sequence of manufacturing steps of the manufacturing method according to the invention.

### Preferred embodiment of the invention

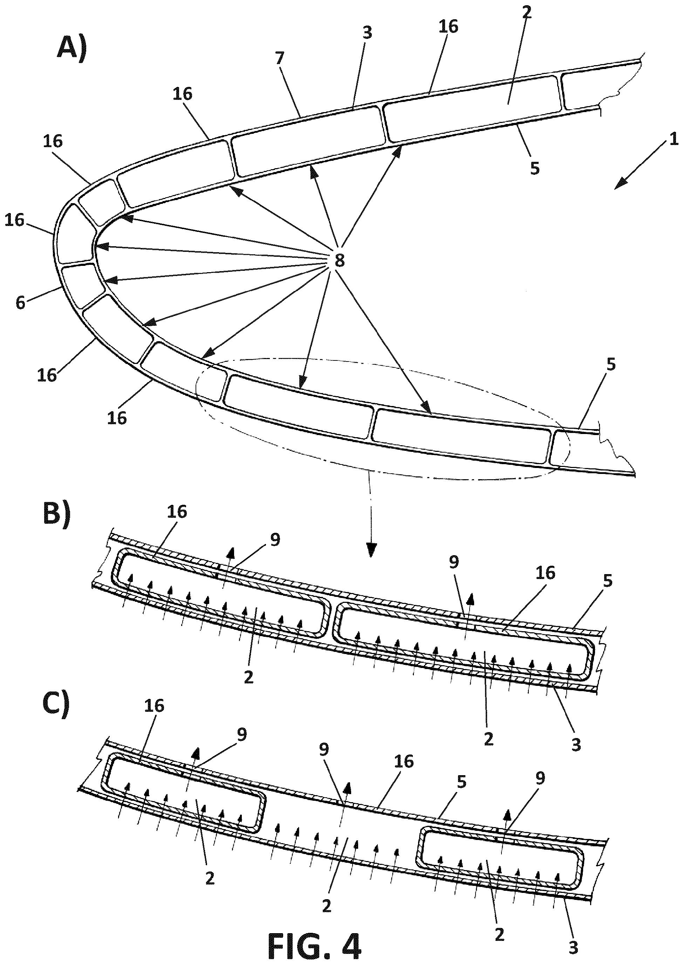

Figure 4 shows an example of a composite leading edge (1) according to the invention, which comprises a perforated outer skin (3) shaped with an aerodynamic leading edge profile, a perforated inner skin (5) internally arranged with respect to the outer skin (3).

The leading edge (1) further comprises a plurality of tubular members (16) span-wise arranged at the leading edge (1) and placed between the outer and inner skins (3,5) to define suction chambers (2) of different sizes. The leading edge (1) is an integral component in that, the outer skin (3), inner skin (5) and the tubular members (16) are cured together.

Preferably, the tubular members (16) have a rectangular or trapezoidal configuration, such as they have four sides, two opposing large sides and two opposing short sides, wherein the two opposing large sides are joined (cured) respectively with the outer and inner skins (3,5), as shown in figure 4. The short sides are transversal to the outer and inner skins (3,5),

In order to implement the laminar flow control configuration, one the large sides of the tubular members (16) is also perforated in correspondence with the position of the perforations of the outer skin (3), such as, air can be suctioned and circulate from the wet surface (7) of the leading edge (1) to an interior region (8) through the suction chambers (2) as indicated by the arrows in figures 4B,4C.

The other large side of the tubular member (16) has at least one perforation (9) overlapping with corresponding perforations of the inner skin (5), as shown in the detail of figure 4B.

The tubular members (16) are consecutively arranged side by side as shown in the embodiment of figures 4A,4B, such as opposite short sides of at least one pair of adjacent (consecutive) tubular members (16) are joined (cured) together.

However, in some alternative embodiments as shown in figure 4C, at least a pair of adjacent tubular members (16) are spaced apart at a selected distance, such a suction chamber (2) is formed by perforated parts of the outer and inner skins (3,5) and two short sides of adjacent and separated tubular members (16). The advantage of this embodiment, is that less material is used to form the suction chambers (2) along the contour of the leading edge (1).

It can be noted in figure 4, that one of the advantages of the invention is that the leading edge (1) configuration can be considered as structural part of a Horizontal Tail Plane or a Vertical Tail Plane, withstanding loads at the leading edge (1) or even resisting bird strikes.

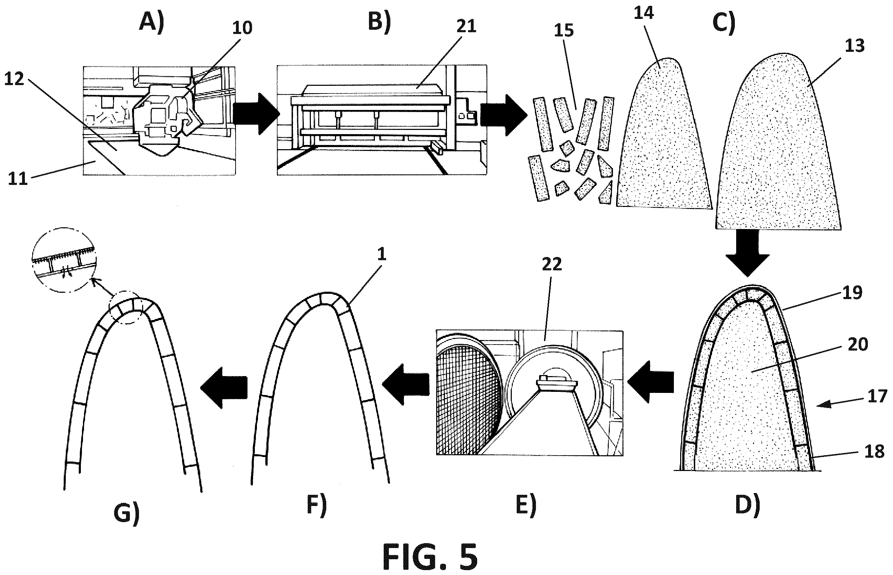

The manufacturing method of the invention to produce leading edge (1) sections as the one previously described, is illustrated in figure 5. First, several laminates (12) of composite material or thermoplastic injection (with or without reinforcements or fillers). In the case of composite laminates, they are laminated preferably on a flat surface (11), for example by means of an Automatic Tape Layup equipment (10) (drawing 5A), which are subsequently conformed (drawing 5B) in independent molding machines (21) to obtain an outer skin pre-form (13), an inner skin pre-form (14), and tubular members pre-forms (15) (drawing 5C).

These pre-forms (13,14,15) are then assembled together to construct a leading edge pre-form assembly (17) with the desired configuration (drawing 5D). For curing and consolidating this leading edge pre-form assembly (17), this is conventionally fitted with tooling modules (20) in each one of its cavities, and a caul plate (18) is placed on the wet surface (7) of the outer skin in case of open mould techniques (pre-preg or dry-fibre infusion) (3). The whole set of elements is then enclosed inside a vacuum bag (19) in case of open mould techniques (pre-preg or dry-fibre infusion), while in the case of injection techniques (RTM) the whole pre-form assembly and inner modules is enclosed inside a closed mould.

This assembly is placed inside an autoclave (22) for curing the leading edge pre-form (17) (drawing 5E) in the case of pre-preg, while in the case of dry fiber the curing step is performed inside an oven, hot-press, self-heated tools or autoclave. After curing, the cured leading edge (1) is de-molded (drawing 5F), and drilled (drawing 5G). In particular, the outer wet skin surface is micro-drilled to allow air suction through it.

The laminate may consist of a carbon fiber pre-preg material, or a carbon fiber dry-fiber material, to which resin is injected at a later stage in a Resin Transfer Molding process.

In the case of thermoplastic injection (with or without reinforcements or fillers). the thermoplastic is melted in the injector machine and injected in the mould cavity that provides the whole consisting in the inner and outer skins connected by means of the chambers system part in single injection cycle.

Other preferred embodiments of the present invention are described in the appended dependent claims and the multiple combinations of those claims.

## Claims

1. Leading edge (1) with a laminar flow control and obtained from composite materials the leading edge (1) comprising:
a perforated outer skin (3) shaped with an aerodynamic leading edge profile,
a perforated inner skin (5) internally arranged with respect to the outer skin (3),
a plurality of suction chambers (2) formed between the outer and inner skins (3, 5), said suction chambers (2) extending span-wise, the leading edge (1) further comprising a plurality of perforated tubular members (16) span-wise arranged in the leading edge (1) and placed between the outer and inner skins (3, 5) to form said suction chambers (2),
**characterized in that,**
the tubular members (16) have four sides, namely two opposing large sides and two opposing short sides, wherein the two opposing large sides are joined respectively with the outer and inner skins (3, 5), and wherein the two opposing short sides are transversal to the outer and inner skins (3, 5);
wherein one of the large sides is perforated in correspondence with the position of the perforations of the outer skin (3), and wherein the other large side has at least one perforation (9) overlapping with a corresponding perforation of the inner skin (5), such that an exterior region of the leading edge (1) is communicated with an interior region (8) of the leading edge (1) through said suction chambers (2);
wherein the outer skin (3), the inner skin (5) and the tubular members (16) are cured together;
and wherein at least one pair of adjacent tubular members (16) are spaced apart at a selected distance, such that a suction chamber (2) is formed by perforated parts of the outer and inner skins (3, 5) and two of the short sides of said pair of adjacent and spaced tubular members (16).

2. Leading edge according to claim 1, wherein the tubular members (16) are arranged consecutively side by side, and wherein at least one of the other two opposite sides of the tubular members (16), is joined to an adjacent tubular member (16).

3. Leading edge according to any of the preceding claims, wherein the tubular members (16) have a rectangular or trapezoidal configuration.

4. Method for manufacturing a section of the leading edge (1) defined in any of the previous claims, the leading edge (1) having laminar flow control and manufactured from composite materials, the method comprising the steps of:
conforming a first laminate to obtain an outer skin pre-form (13) with the shape of an aerodynamic leading edge profile,
conforming a second laminate to obtain an inner skin pre-form (14),
providing a plurality of tubular members pre-forms (15),
assembling together the outer skin pre-form (13), the inner skin pre-form (14) and the tubular members pre-forms (15), to form a leading edge pre-form assembly (17) wherein the tubular members pre-forms (15) are span-wise arranged between the outer skin and inner skin pre-forms (13, 14), to configure a plurality of suction chambers (2) between the outer and inner skin pre-forms (13, 14),
curing together the leading edge pre-form assembly (17), and
perforating the outer skin pre-form (13), the inner skin pre-form (14) and tubular members pre-forms (15) in a cured state, to communicate an exterior region of the leading edge with an interior region (8) of the leading edge (1) through said suction chambers (2);
wherein the tubular members pre-forms (15) have four sides, and wherein two opposite sides of the tubular members pre-forms (15) are joined respectively with the outer and inner skins pre-forms (13,14);
and wherein at least one pair of adjacent tubular members pre-forms (15) are spaced apart at a selected distance, such that a suction chamber (2) is formed by perforated parts of the outer and inner skins pre-forms (13, 14) and two of the short sides of said pair of adjacent and spaced tubular members pre-forms (15).

5. Method according to claim 4 wherein the outer skin pre-form (13), the inner skin pre-form (14) and the tubular members pre-forms (15) are obtained from a carbon fiber pre-preg material.

6. Method according to claim 4 wherein the outer skin pre-form (13), the inner skin pre-form (14) and the tubular members pre-forms (15) are obtained from a carbon fiber dry-fiber material, to which resin is injected in a Resin Transfer Molding process or in an open mould process.

7. Method according to claim 4, wherein an erosion protective layer is co-cured and integrated with the leading edge (1).

8. Method according to claim 7, wherein the erosion protective layer consist of a polyurethane coating or a metallic film impregnated with resin on one of its surfaces.

9. Method according to claim 4, wherein the step of assembling together the outer skin pre-form (13), the inner skin pre-form (14) and the tubular members pre-forms (15) comprises enclosing the outer skin pre-form (13), the inner skin pre-form (14) and the tubular members pre-forms (15) inside a vacuum bag (19) in case of open mould techniques.

10. Method according to claim 4, wherein the step of assembling together the outer skin pre-form (13), the inner skin pre-form (14) and the tubular members pre-forms (15) comprises enclosing the outer skin pre-form (13), the inner skin pre-form (14) and the tubular members pre-forms (15) inside a closed mould in case of injection techniques.

11. Method according to claim 4, wherein the step of curing the leading edge pre-form assembly (17) comprises placing said leading edge pre-form assembly (17) inside an autoclave (22) in case of pre-preg infusion.

12. Method according to claim 4, wherein the step of curing the leading edge pre-form assembly (17) comprises placing said leading edge pre-form assembly (17) inside an oven, hot-press or self-heated tools in case of dry-fibre infusion.

## Patentansprüche

1. Vorderkante (1) mit laminarer Strömungskontrolle, und hergestellt aus Verbundmaterialien, wobei die Vorderkante (1) aufweist:
eine perforierte Außenhaut (3), die mit einem aerodynamischen Vorderkantenprofil versehen ist,
eine perforierte Innenhaut (5), die relativ zu der Außenhaut (3) innen angeordnet ist,
mehreren Saugkammern (2), die zwischen der Außen- und der Innen-Haut (3, 5) ausgebildet sind, wobei sich die Saugkammern (2) in Spannrichtung erstrecken, wobei die Vorderkante (1) ferner mehrere perforierte rohrförmige Teile (16) aufweist, die in Spannrichtung in der Vorderkante (1) angeordnet sind und zwischen der Außen- und der Innen-Haut (3, 5) platziert sind, um die Saugkammern (2) zu bilden,
**dadurch gekennzeichnet, dass**
die rohrförmigen Teile (16) vier Seiten haben, nämlich zwei einander gegenüberliegende lange Seiten und zwei einander gegenüberliegende kurze Seiten, wobei die beiden einander gegenüberliegenden langen Seiten mit der Außen- bzw. Innen-Haut (3, 5) verbunden sind, und wobei die beiden einander gegenüberliegenden kurzen Seiten quer zu der Außen- und der Innen-Haut (3, 5) verlaufen;
wobei eine der langen Seiten entsprechend der Position der Perforationen der Außenhaut (3) perforiert ist, und wobei die andere lange Seite mindestens eine Perforation (9) aufweist, die sich mit einer entsprechenden Perforation der Innenhaut (5) überlappt, derart, dass ein Außenbereich der Vorderkante (1) durch die Saugkammern (2) mit einem Innenbereich (8) der Vorderkante (1) in Verbindung steht;
wobei die Außenhaut (3), die Innenhaut (5) und die rohrförmigen Teile (16) miteinander verbondet sind;
und wobei mindestens ein Paar aneinandergrenzender rohrförmiger Teile (16) um eine gewählte Distanz gegenseitig beabstandet ist, derart, dass
eine Saugkammer (2) durch perforierte Teile der Außen- und der Innen-Haut (3, 5) und zwei der kurzen Seiten des Paars aneinandergrenzender und beabstandeter rohrförmiger Teile (16) gebildet wird.

2. Vorderkante (1) nach Anspruch 1, bei der die rohrförmigen Teile (16) aufeinanderfolgend Seite an Seite angeordnet sind, und bei der mindestens eine der anderen beiden einander gegenüberliegenden Seiten der rohrförmigen Teile (16) mit einem angrenzenden rohrförmigen Teil (16) verbunden ist.

3. Vorderkante (1) nach einem der vorhergehenden Ansprüche, bei der die rohrförmigen Teile (16) eine rechteckige oder trapezförmige Konfiguration haben.

4. Verfahren zum Herstellen eines Abschnitts der Vorderkante (1) gemäß der Definition nach einem der vorhergehenden Ansprüche, wobei die Vorderkante (1) zur laminaren Strömungskontrolle ausgebildet ist und aus Verbundmaterialien hergestellt ist, wobei das Verfahren die Schritte umfasst:
Formen eines ersten Laminats zum Erhalt einer Außenhaut-Vorform (13) mit der Gestalt eines aerodynamischen Vorderkantenprofils,
Formen eines zweiten Laminats zum Erhalt einer Innenhaut-Vorform (14), Bereitstellen mehrerer Röhrenformteile-Vorformen (15),
Zusammenfügen der Außenhaut-Vorform (13), der Innenhaut-Vorform (14) und der Röhrenformteile-Vorformen (15) zum Bilden einer Vorderkanten-Vorform-Baugruppe (17), wobei die Röhrenformteile-Vorformen (15) in Spannrichtung zwischen der Außenhaut- und der Innenhaut-Vorform (13, 14) angeordnet werden, um mehrere Saugkammern (2) zwischen der Außenhaut- und der Innenhaut-Vorform (13, 14) zu bilden,
Verbonden der Vorderkanten-Vorform-Baugruppe (17), und
Perforieren der Außenhaut-Vorform (13), der Innenhaut-Vorform (14) und der Röhrenformteile-Vorformen (15) in einem verbondeten Zustand, um einen Außenbereich der Vorderkante durch die Saugkammern (2) mit einem Innenbereich (8) der Vorderkante (1) in Verbindung zu setzen;
wobei die Röhrenformteile-Vorformen (15) vier Seiten haben, und wobei zwei einander gegenüberliegende Seiten der Röhrenformteile-Vorformen (15) mit der Außenhaut- bzw. der Innenhaut-Vorform (13, 14) verbunden werden;
und wobei mindestens ein Paar aneinandergrenzender Röhrenformteile-Vorformen (15) um eine gewählte Distanz gegenseitig beabstandet wird, derart, dass
eine Saugkammer (2) durch perforierte Teile der Außenhaut- und der Innenhaut-Vorform (13, 14) und zwei der kurzen Seiten des Paars aneinandergrenzender und beabstandeter Röhrenformteile-Vorformen (15) gebildet wird.

5. Verfahren nach Anspruch 4, bei dem die Außenhaut-Vorform (13), die Innenhaut-Vorform (14) und die Röhrenformteile-Vorformen (15) aus einem Carbonfaser-Prepreg-Material erhalten werden.

6. Verfahren nach Anspruch 4, bei dem die Außenhaut-Vorform (13), die Innenhaut-Vorform (14) und die Röhrenformteile-Vorformen (15) aus einem Carbonfaser-Trockenfaser-Material erhalten werden, in das Harz in einem Harz-Injektionsvorgang oder einem mit offener Form durchgeführten Vorgang einführt wird.

7. Verfahren nach Anspruch 4, bei dem eine Erosionsschutzschicht mit der Vorderkante (1) verbondet und in diese integriert wird.

8. Verfahren nach Anspruch 7, bei dem die Erosionsschutzschicht aus einer Polyeruthanbeschichtung oder einem metallischen Film besteht, die/der an einer ihrer/seiner Oberflächen mit Harz imprägniert ist.

9. Verfahren nach Anspruch 4, bei dem der Schritt des Zusammenfügens der Außenhaut-Vorform (13), der Innenhaut-Vorform (14) und der Röhrenformteile-Vorformen (15) im Fall von Techniken mit offener Form das Umschließen der Außenhaut-Vorform (13), der Innenhaut-Vorform (14) und der Röhrenformteile-Vorformen (15) in einem Vakuumbeutel (19) umfasst.

10. Verfahren nach Anspruch 4, bei dem der Schritt des Zusammenfügens der Außenhaut-Vorform (13), der Innenhaut-Vorform (14) und der Röhrenformteile-Vorformen (15) im Fall von Injektionstechniken das Umschließen der Außenhaut-Vorform (13), der Innenhaut-Vorform (14) und der Röhrenformteile-Vorformen (15) in einer geschlossenen Form umfasst.

11. Verfahren nach Anspruch 4, bei dem der Schritt des Verbondens der Vorderkanten-Vorform-Baugruppe (17) im Fall einer Prepreg-Infusion das Platzieren der Vorderkanten-Vorform-Baugruppe (17) in einem Autoklaven (22) umfasst.

12. Verfahren nach Anspruch 4, bei dem der Schritt des Verbondens der Vorderkanten-Vorform-Baugruppe (17) im Fall einer Trockenfaser-Infusion das Platzieren der Vorderkanten-Vorform-Baugruppe (17) in einem Ofen umfasst.

## Revendications

1. Bord d'attaque (1) pourvu d'une commande de flux laminaire obtenu à partir de matériaux composites, le bord d'attaque (1) comprenant :
un revêtement externe perforé (3) formé avec un profil de bord d'attaque aérodynamique,
un revêtement interne perforé (5) agencé de manière interne par rapport au revêtement externe (3),
une pluralité de chambres d'aspiration (2) formées entre les revêtements externe et interne (3, 5), lesdites chambres d'aspiration (2) s'étendant dans le sens de l'envergure, le bord d'attaque (1) comprenant en outre une pluralité d'éléments tubulaires perforés (16) agencés dans le sens de l'envergure dans le bord d'attaque (1) et placés entre les revêtements externe et interne (3, 5) pour former lesdites chambres d'aspiration (2),
**caractérisé en ce que**,
les éléments tubulaires (16) ont quatre côtés, à savoir deux grands côtés opposés et deux côtés opposés courts, dans lequel les deux grands côtés opposés sont respectivement reliés aux revêtements externe et interne (3, 5) et dans lequel les deux côtés opposés courts sont transversaux aux revêtements externe et interne (3, 5) ;
dans lequel un des grands côtés est perforé en correspondance avec la position des perforations du revêtement externe (3) et dans lequel l'autre grand côté possède au moins une perforation (9) qui chevauche une perforation correspondante du revêtement interne (5), de telle sorte que
une région extérieure du bord d'attaque (1) entre en communication avec une région intérieure (8) du bord d'attaque (1) par l'intermédiaire desdites chambres d'aspiration (2) ;
dans lequel le revêtement externe (3), le revêtement interne (5) et les éléments tubulaires (16) sont durcis ensemble ;
et dans lequel au moins une paire d'éléments tubulaires adjacents (16) sont espacés à une distance sélectionnée, de telle sorte que
une chambre d'aspiration (2) est formée par des parties perforées des revêtements externe et interne (3, 5) et deux des côtés courts de ladite paire d'éléments tubulaires adjacents et espacés (16).

2. Bord d'attaque selon la revendication 1, dans lequel les éléments tubulaires (16) sont agencés de manière consécutive côte à côte, et dans lequel au moins un des deux autres côtés opposés des éléments tubulaires (16) est relié à un élément tubulaire adjacent (16).

3. Bord d'attaque selon l'une quelconque des revendications précédentes, dans lequel les éléments tubulaires (16) ont une configuration rectangulaire ou trapézoïdale.

4. Procédé de fabrication d'une section du bord d'attaque (1) défini dans l'une quelconque des revendications précédentes, le bord d'attaque (1) étant pourvu d'une commande de flux laminaire obtenu à partir de matériaux composites, le procédé comprenant les étapes consistant à :
conformer un premier stratifié pour obtenir une préforme de revêtement externe (13) avec la forme d'un profil de bord d'attaque aérodynamique,
conformer un second stratifié pour obtenir une préforme de revêtement interne (14),
fournir une pluralité de préformes d'éléments tubulaires (15),
assembler la préforme de revêtement externe (13), la préforme de revêtement interne (14) et les préformes d'éléments tubulaires (15) ensemble pour former un ensemble de préforme de bord d'attaque (17), dans lequel les préformes d'éléments tubulaires (15) sont agencés dans le sens de l'envergure entre les préformes de revêtement externe et de revêtement interne (13, 14), pour configurer une pluralité de chambres d'aspiration (2) entre les préformes de revêtement externe et de revêtement interne (13, 14),
durcir l'ensemble de préforme de bord d'attaque ensemble (17) et
perforer la préforme de revêtement externe (13), la préforme de revêtement interne (14) et les préformes d'éléments tubulaires (15) dans un état durci, de façon à faire communiquer une région extérieure du bord d'attaque avec une région intérieure (8) du bord d'attaque (1) par l'intermédiaire desdites chambres d'aspiration (2) ;
dans lequel les préformes d'éléments tubulaires (15) ont quatre côtés, et dans lequel deux côtés opposés des préformes d'éléments tubulaires (15) sont reliés respectivement aux préformes de revêtement externe et interne (13, 14) ;
et dans lequel au moins une paire de préformes d'éléments tubulaires adjacentes (15) sont espacées à une distance sélectionnée, de telle sorte que
une chambre d'aspiration (2) est formée par des parties perforées des préformes de revêtement externe et interne (13, 14) et deux des côtés courts de ladite paire de préformes d'élément tubulaires adjacentes et espacées (15).

5. Procédé selon la revendication 4, dans lequel la préforme de revêtement externe (13), la préforme de revêtement interne (14) et les préformes d'éléments tubulaires (15) sont obtenues à partir d'un matériau pré-imprégné en fibre de carbone.

6. Procédé selon la revendication 4, dans lequel la préforme de revêtement externe (13), la préforme de revêtement interne (14) et les préformes d'éléments tubulaires (15) sont obtenues à partir d'un matériau à fibre sèches en fibre de carbone, auquel une résine est injectée dans un processus de moulage par transfert de résine ou un processus à moulage ouvert.

7. Procédé selon la revendication 4, dans lequel une couche de protection contre l'érosion est durcie et intégrée avec le bord d'attaque (1).

8. Procédé selon la revendication 7, dans lequel la couche de protection contre l'érosion consiste en un revêtement de polyuréthane ou en un film métallique imprégné d'une résine sur une de ses surfaces.

9. Procédé selon la revendication 4, dans lequel l'étape consistant à assembler la préforme de revêtement externe (13), la préforme de revêtement interne (14) et les préformes d'éléments tubulaires (15) ensemble comprend l'étape consistant à enfermer la préforme de revêtement externe (13), la préforme de revêtement interne (14) et les préformes d'éléments tubulaires (15) dans un sac sous vide (19) dans le cas de techniques à moulage ouvert.

10. Procédé selon la revendication 4, dans lequel l'étape consistant à assembler la préforme de revêtement externe (13), la préforme de revêtement interne (14) et les préformes d'éléments tubulaires (15) comprend l'étape consistant à enfermer la préforme de revêtement externe (13), la préforme de revêtement interne (14) et les préformes d'éléments tubulaires (15) à l'intérieur d'un moule fermé dans le cas de techniques par injection.

11. Procédé selon la revendication 4, dans lequel l'étape consistant à durcir l'ensemble de préforme de bord d'attaque (17) comprend le placement dudit ensemble de préforme de bord d'attaque (17) à l'intérieur d'un autoclave (22) dans le cas d'une infusion de pré-imprégnation.

12. Procédé selon la revendication 4, dans lequel l'étape consistant à durcir l'ensemble de préforme de bord d'attaque (17) comprend le placement dudit ensemble de préforme de bord d'attaque (17) à l'intérieur d'un four, d'une presse à chaud ou d'outils autochauffants dans le cas d'une infusion à fibre sèche.
